# EUROPEAN PATENT APPLICATION

(11) **EP 2 830 102 A1**
(43) Date of publication of application: **28.01.2015**
(21) Application number: 13178271.6
(22) Date of filing: 26.07.2013
(51) Int. Cl.: H01L 31/042, H01L 31/048, F24J 2/52

(54) **Solar panel**

(71) Applicant: E.ON Climate & Renewables GmbH, 45131 Essen (DE)
(72) Inventor: Christ, Stefan, 47167 Duisburg (DE)
(74) Representative: Glawe, Delfs, Moll

(57) **Abstract**

Solar panel (1) comprising at least one solar module (2) to be mounted on an inclined roof (91), wherein at least one mounting means (3) is provided that comprises a short bar (4) with two end points (5, 6). One end point (5) is configured to be connected to the solar module (2) and the other end point (6) is configured to be adhesively bonded to an inclined roof (91).

## Description

The invention relates to solar panels that are to be mounted on inclined roofs. The invention also relates to a meth-od for mounting solar modules onto an inclined roof.

Installing solar panels on inclined roofs is common in the state of the art. Owners of houses - commercial and private - equip suitable roof areas with solar panels comprising photo voltaic cells in order to generate electricity, either for own requirements or for commercially feeding it into a public power grid. Suitable roof areas for installing solar panels are those that provide a high possible radiation density of sunlight all year round.

Facilitating the sunlight with photovoltaic cells is improved if the sunlight hits the photovoltaic cells at an angle as perpendicular as possible. If the solar panel does not track the sun during the course of a day, outside the tropics it is thus favourable to arrange photovoltaic cells with an elevation angle so that the deviations of the sunlight from an ideal perpendicular impact on the photovoltaic cells are minimized in total during the course of a day and during the course of a year despite the movement of the sun.

It is known to install solar panels on inclined roofs that face the equator, wherein the solar panels are arranged parallel to the roof. In this case, the solar panels are automatically inclined in a favourable manner. Furthermore, the solar panels are installed in areas that would otherwise be unused.

In order to install solar panels on an inclined roof, heretofore the roof had to be at least partially stripped to mount a frame to the structure of the building, before the roof could be retiled and solar panels could be mounted on the frame above the roof tiles. This type of installation is complex, burdensome and cost intensive.

It is an object of the invention to provide a solar panel to be mounted on an inclined roof as well as a method for mounting a solar panel on an inclined roof that avoid the disadvantages of the state of the art at least partially.

This object is met by a solar panel according to the main claim. Preferable embodiments are to be found in the dependent claims.

The present invention provides a solar panel comprising at least one solar module to be mounted on an inclined roof, wherein at least one mounting means is provided that comprises a short bar with two end points, wherein one end point is configured to be connected to the solar module and the other end point is configured to be adhesively bonded to an inclined roof.

The present invention further provides a method for mounting a solar module onto an inclined roof, comprising the steps of:
adhesively bonding the mounting means at the other of its end points to the inclined roof; and
connecting mounting means comprising a short bar with two end points at one of its end points to the solar module.

The installation of the inventive solar panel is easy and straightforward. First, the at least one mounting means is adhesively bonded to an inclined roof with one of its end points. Then the solar module is connected to the other end point of the mounting means. These steps might also take place in reverse order. Either way, the solar panel is mounted on the inclined roof without the roof needing to be stripped and/or re-tiled.

The end points of the short bar are configured for allowing the connection to the inclined roof or the solar module. For example, the end point to be adhesively bonded to the inclined roof provides a suitable bonding surface. Depending on the roof surface structure of the roof, this bonding surface might be flattened or have a structure matching the roof surface structure.

In general, the solar panel comprises more than one inventive mounting means in order to provide a fixing of the solar panel with sufficient stability. Usually, the number of mounting means will be at least four or more. However, it is also possible that the solar panel is otherwise affixed at certain points. For example, the solar panel might at one specific point be affixed to the structure of the building as done in the state of the art, especially at a point where wiring connecting the solar panel with a distribution line within the building is situated. In this case, the inventive mounting means may be provided in areas of the solar panel that is not otherwise affixed as described.

The mounting means may be connected to the solar module by common means, e.g. by screws. It is preferred, however, if the mounting means is adhesively bonded to the solar module. In this case, the mounting means is thus adhesively boned not only to the inclined roof but also to the solar module. Accordingly, additional elements such as screws etc. are not required. The end point to be adhesively bonded to the solar module might be flattened or otherwise provide a surface suitable for bonding it to the solar module.

It is preferred that at least one of the end points of the mounting means comprises a sturdy base that is attached to the short bar of the mounting means and a cushioning layer that is provided on the sturdy base, wherein the cushioning layer provides the surface the end point is adhesively bonded to the inclined roof or the solar module with. By providing a cushioning layer between the sturdy base of the mounting means and the solar module and/or between the sturdy base of the mounting means and the solar module, tensions within the solar panel that might result from inaccuracies in production and/or installation can be avoided or at least reduced. The cushioning layer might also serve a damper for vibration generated by wind acting on the solar panel.

It is further preferred that at least one of the end points is arranged pivotably on the short bar of the mounting means. Again, this might help to avoid or reduce tensions within the solar panel resulting from inaccuracies in production and/or installation. Furthermore, a local non-planarity of the roof, e.g. because of shaped tiles or other protrusions, may be compensated.

In a preferred embodiment the short bar of the mounting means is adjustable in length. This provides additional flexibility when using the mounting means. In order to achieve the adjustability in length, it is preferred that the short bar of the mounting means comprises at least to elements telescopically guided in each other.

The adhesive for bonding the mounting means to the inclined roof and/or to the solar module preferably is a methyl methacrylate adhesive. Methyl methacrylate adhesives are commonly used as structural adhesives due to their excellent strength, impact resistance, thermal shock, fatigue resistance and peel strength. They are based on thermoset adhesives formulations that give excellent structural properties to bond a wide-variety of durable substrates. Suitable adhesives are, for example, methyl methacrylate construction adhesives. They may be two component adhesives that can preferably be applied like a one component adhesive. One example of a suitable adhesive is WEICON^{®} RK-7000 construction adhesive.

It is preferred when the end points of the mounting means are spaced apart 5 to 20 cm and/or the end points are of circular shape with a diameter of 2 to 5 cm. The short bar of the mounting means may be made of aluminium or steel. The sturdy base of at least one of the end points may also be made of aluminium or steel while the cushioning layer of at least one of the end points may be made of rubber or soft plastic.

In another preferred embodiment, the solar panel comprises two or more solar modules that are attached to a common frame, wherein one end point of the mounting means is configured to be connected to said common frame. The mounting means are thus not directly attached to a solar module but rather to a common frame with solar modules attached thereto. Providing such a common frame can improve the overall stability of the solar panel.

For explanation of the method according to the present invention it is referred to the remarks above. The inventive method and its preferred embodiments are readily apparent from the explanations of the inventive solar panel that is suitable for executing the inventive method.

The features, objects and advantages of the invention will become further apparent by the following exemplary description of preferred embodiments in conjunction with the accompanying drawings, which show:
- Figure 1: a schematic overview of a first embodiment of a solar panel according to the invention mounted on an inclined roof;
- Figure 2: a side view of the solar panel of figure 1;
- Figure 3: a detailed view of a mounting means of the solar panel of figures 1 and 2;
- Figure 4: a detailed view of an alternative mounting means for the solar panel of figures 1 and 2;
- Figure 5: a schematic overview of a second embodiment of a solar panel according to the invention mounted on an inclined roof;
- Figure 6: a side view of the solar panel of figure 5; and
- Figure 7: a schematic side view of a third embodiment of a solar panel according to the invention mounted on an inclined roof.

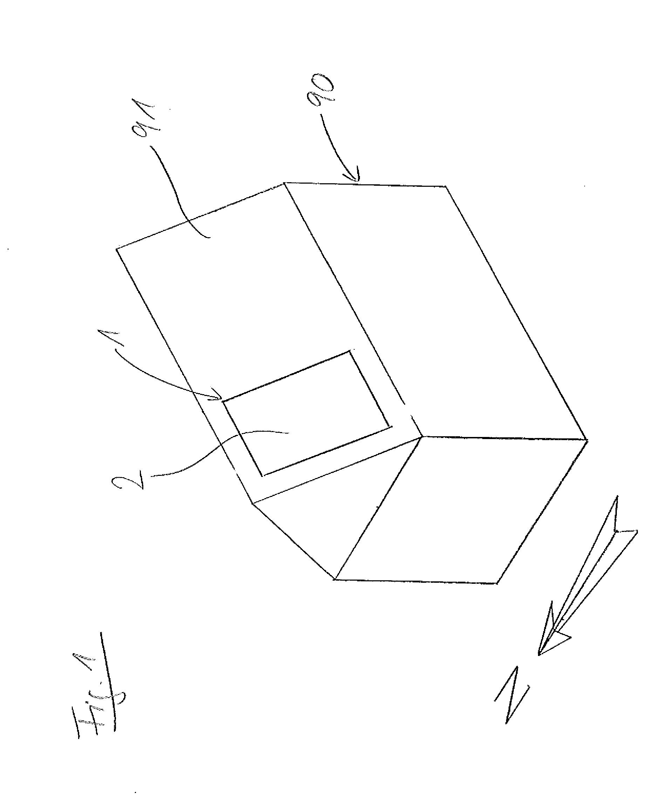

Figure 1 shows a solar panel 1 according to the present invention that is installed on the part of the inclined roof 91 of a house that is facing south. Assuming the depicted house 90 is situation in the northern hemisphere outside the tropics, this orientation of the roof and subsequently the solar panel 1 mounted thereon is favourable for the energy output during the course of a day as well as during the course of a year. Of course, if the house 90 would be situated in the southern hemisphere outside the tropics, the solar panel 1 would have to be installed on the part of the inclined roof 91 that faces north.

The solar panel 1 in figure 1 comprises a single solar module 2 that is suitable to convert solar energy into electric energy. The solar module 2 might consist of photovoltaic cells.

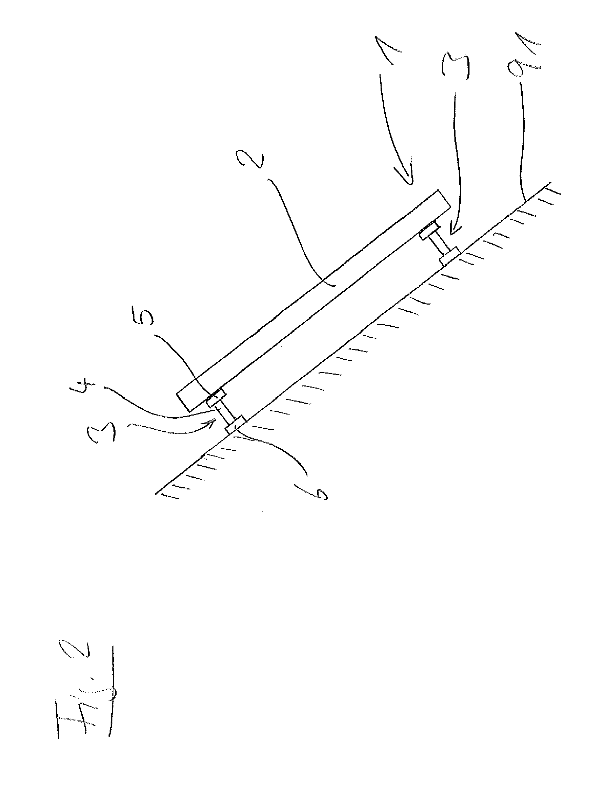

In figure 2 that shows a partial side view of the solar panel 1 of figure 1 mounted on the inclined roof 91, the actual mounting of the solar panel 1 is depicted. The solar panel 1 comprises mounting means 3 that are adhesively bonded to the solar module 2 of the solar panel 1 at one end and to the inclined roof 91 at the other and. Due to the mounting means 3 being boned to the solar module 2 of the solar panel 1 as well as the roof 91, the solar module 2 is securely mounted on the roof 91. The adhesive used in this example is WEICON^{®} RK-7000 construction adhesive. Other suitable adhesives may be methyl methacrylate construction adhesives. These may be two component adhesives that can preferably be applied like a one component adhesive.

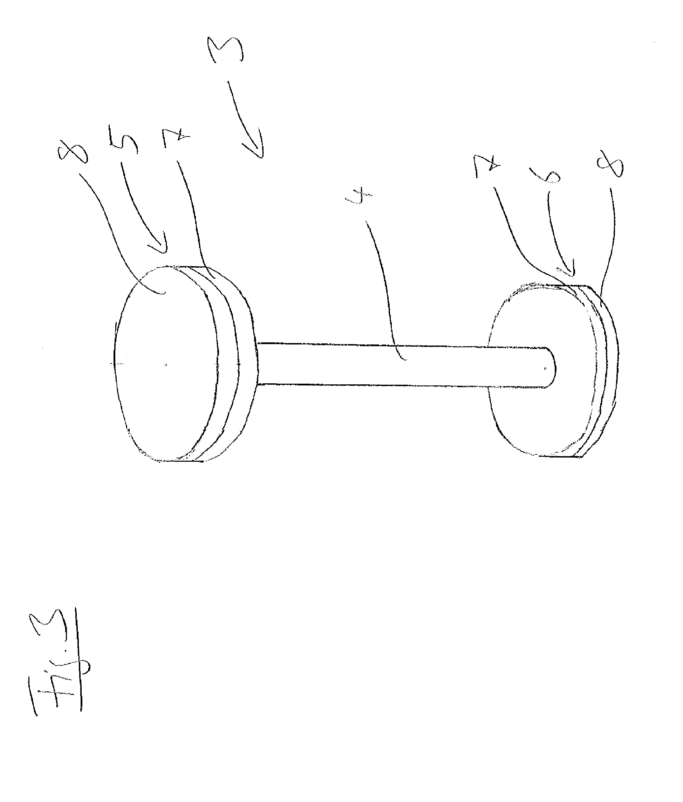

Figure 3 shows a first alternative of the mounting means 3 as shown in figure 2. The mounting means 3 comprises a short bar 4 with two end points 5, 6. One end point 5 is configured to be adhesively bonded to the solar module 2 while the other end point 6 is configured to be adhesively bonded to the inclined roof 91. Both end points are flattened and thus provide flat bonding surfaces.

Each of the end points 5, 6 of the mounting means 3 comprises a sturdy base 7 that is attached to the short bar 4 of the mounting means 3. On each sturdy base 7, a cushioning layer 8 is provided. Each cushioning layer 7 provides the flat surfaces with which the mounting means 2 is adhesively bonded to the solar module 2 and the inclined roof 91.

The end points 5, 6 are of circular shape with a diameter of 2 to 5 cm. The overall height of the mounting means 3 can be between 5 and 20 cm. The short bar 4 and the sturdy bases 7 of the end points 5, 6 are made out of aluminium, while the cushion layers 8 are made out of rubber material.

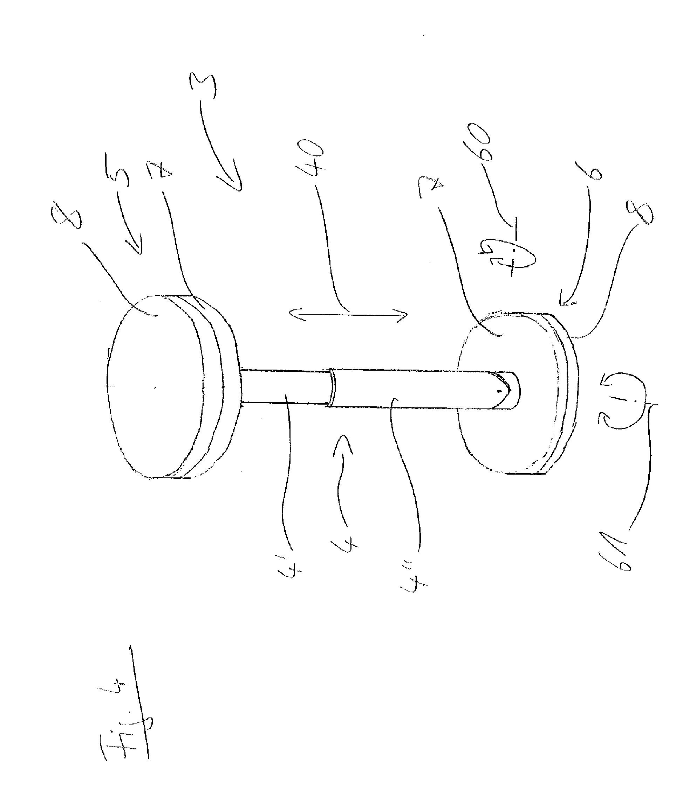

Figure 4 shows an alternative embodiment for the mounting means 3. The mounting means 3 of figure 4 is similar to the one shown in figure 3. Therefore, identical reference numbers are used for identical parts and the explanations above remains valid. In the following, only the additional feature of the mounting means 3 of figure 4 over the one shown in figure 3 are discussed.

The short bar 4 of the mounting means 3 according to figure 4 is adjustable in length (cf. double-headed arrow 40). To achieve this, the short bar 4 comprises two elements 4', 4'' that are telescopically guided in each other. By moving these elements 4', 4'' in relation to each other, the length of the short bar 4 can be adjusted.

Additionally, the one end point 6 of the mounting means 3 is pivotably connected to the short bar 4. As a result, the end point 6 can be swivelled in any direction as illustrated by the double-headed arrows 60, 61. Though not illustrated, the other end point 5 might similarly be pivotably connected to the short bar 4.

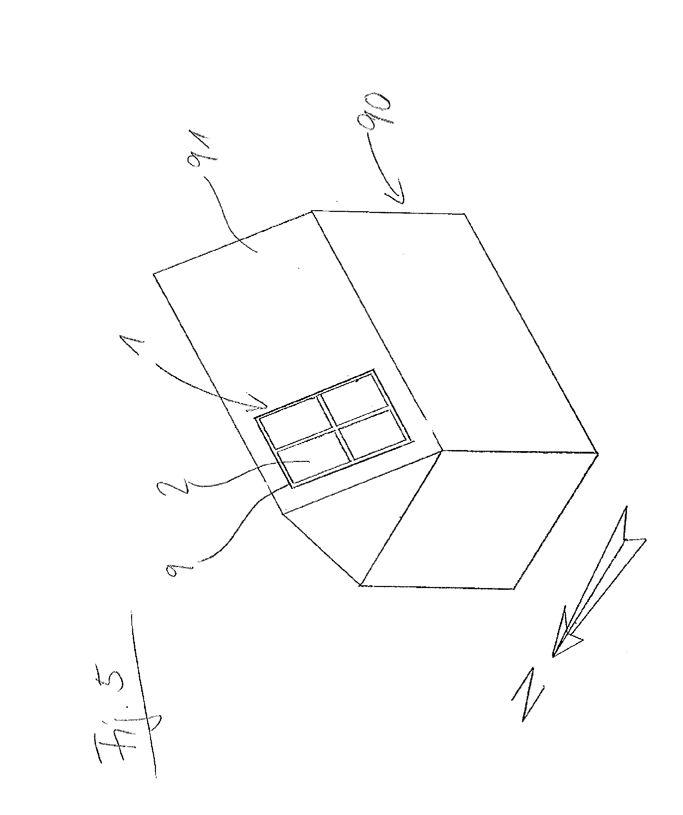

In figure 5 another embodiment of a solar panel 1 according to the present inventions is shown. Again, the solar panel 1 is mounted on the inclined roof 91 of a house 90. Insofar the explanations in connection with figure 1 remain valid. However, the solar panel 1 in figure 5 comprises four solar modules 2 instead of just one as the solar panel 1 of figure 1 does. The solar modules 2 in the second embodiment are not directly mounted to the inclined roof 91 but are rather attached to a frame structure 9.

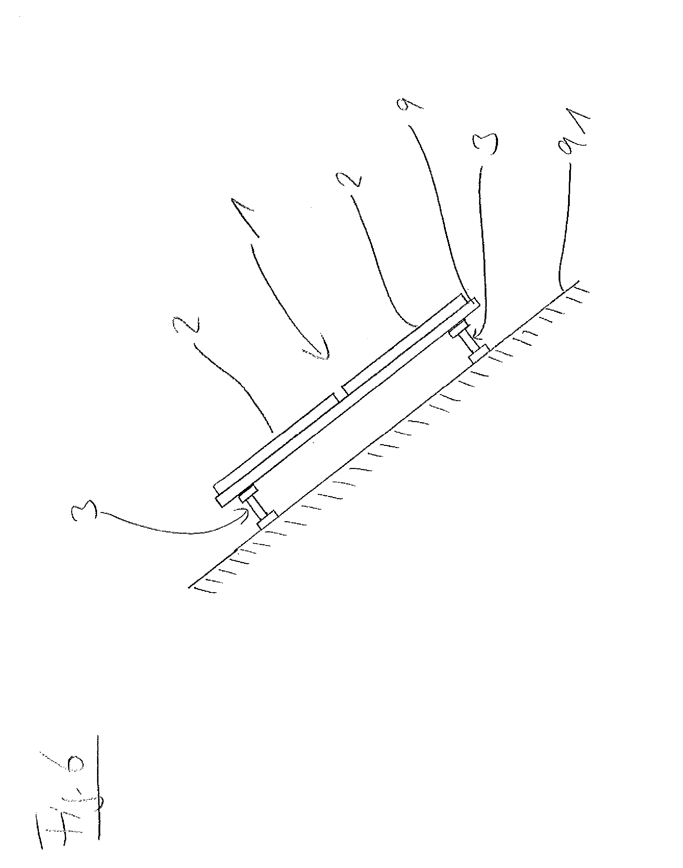

As can be seen from figure 6 that shows a partial side view of the solar panel 1 of figure 5 mounted on the inclined roof 91, the frame structure 9 is connected to the inclined roof 91 by the use of mounting means 3. These mounting means 3 can be the mounting means 3 shown in figures 3 and/or 4.

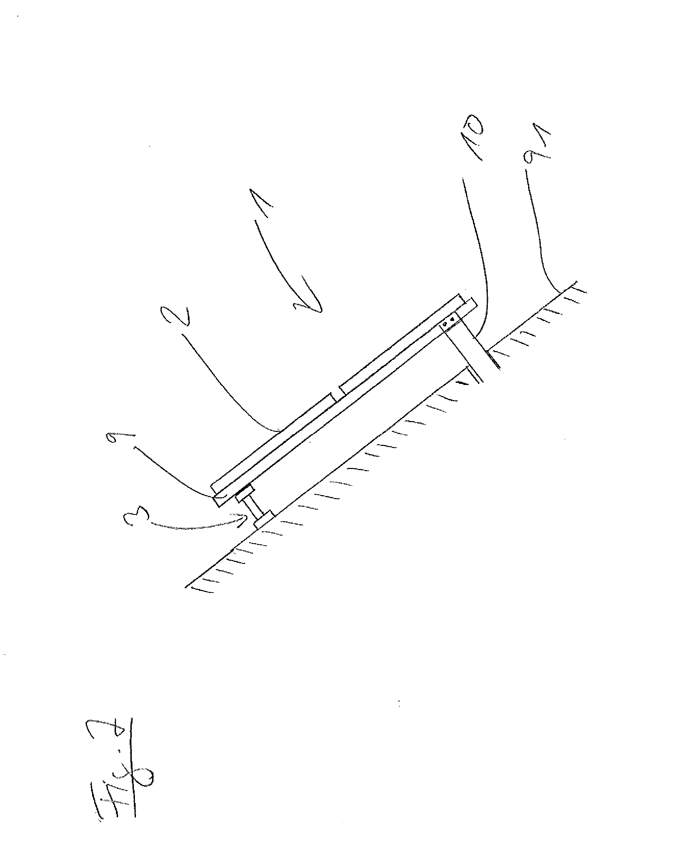

The third embodiment of a solar panel 1 according to the invention as shown in figure 7 is substantially identical to the second embodiment of figures 5 and 6. It is thus referred to the above.

However, the solar panel 1 shown in figure 7 differs from the one of figures 5 and 7 in that the frame structure 9 is not mounted to the roof solely by mounting means 3 but rather has a mix of mounting means 3 and prior art fixation 10 that attaches the frame structure 9 to the structure of the building (not shown). While the installation of the prior art fixation 10 might still require stripping and retiling of the roof 91, the mounting means 3 help to avoid this effort at every single point where the solar panel 1 has to be fixated.

## Claims

1. Solar panel (1) comprising at least one solar module (2) to be mounted on an inclined roof (91),
**characterized in that**
at least one mounting means (3) is provided that comprises a short bar (4) with two end points (5, 6), wherein one end point (5) is configured to be connected to the solar module (2) and the other end point (6) is configured to be adhesively bonded to an inclined roof (91).

2. Solar panel according to claim 1,
**characterized in that**
the one end point (5) is configured to be adhesively bonded to the solar module (2).

3. Solar panel according to claim 1 or 2,
**characterized in that**
at least one of the end points (5, 6) of the mounting means (3) comprises a sturdy base (7) that is attached to the short bar (4) of the mounting means (2) and a cushioning layer (8) that is provided on the sturdy base (7), wherein the cushioning layer (8) provides the surface the end point (5, 6)is adhesively bonded to the inclined roof (91) or the solar module (2) with.

4. Solar panel according to claims 1, 2 or 3,
**characterized in that**
at least one of the end points (5, 6) is arranged pivotably on the short bar (4) of the mounting means (3).

5. Solar panel according to one of the preceding claims,
**characterized in that**
the short bar (4) of the mounting means (3) is adjustable in length.

6. Solar panel according to claim 5,
**characterized in that**
the short bar (4) of the mounting means (3) comprises at least to elements (4', 4'') telescopically guided in each other.

7. Solar panel according to one of the preceding claims,
**characterized in that** one or both end points (5, 6)
are configured to be adhesively mounted with a methyl methacrylate adhesive.

8. Solar panel according to one of the preceding claims,
**characterized in that**
the end points (5, 6) of the mounting means (3) are spaced apart 5 to 20 cm and/or the end points (5, 6) are flattened and/or of circular shape with a diameter of 2 to 5 cm.

9. Solar panel according to one of the preceding claims,
**characterized in that**
the short bar (4) of the mounting means (3) is made of aluminium or steel.

10. Solar panel according to one of the preceding claims,
**characterized in that**
the sturdy base (7) of at least one of the end points (5, 6) is made of aluminium or steel and/or the cushioning layer (8) of at least one of the end points (5, 6) is made of rubber or soft plastic.

11. Solar panel according to one of the preceding claims,
**characterized in that**
the solar panel (1) comprises two or more solar modules (2) that are attached to a common frame (9), wherein one end point (5) of the mounting means is configured to be connected, preferably adhesively bonded to said common frame (9).

12. Method for mounting a solar module (2) onto an inclined roof, comprising the steps of
adhesively bonding the mounting means (3) at the other of its end points (6) to the inclined roof; and
connecting mounting means (3) comprising a short bar (4) with two end points (5, 6) at one of its end points (5) to the solar module (2).

13. Method according to claim 12,
**characterized in that**
the step of connecting the mounting means (3) to the solar module (2) comprises adhesively bonding the mounting means (3) at one of its end points (5) to the solar module (2).

14. Method according to claim 12 or 13,
**characterized in that** a methyl methacrylate adhesive is used.
